Europäisches Patentamt

European Patent Office

Office européen des brevets

(11) Publication number: **0 112 475**
**A1**

## (12) EUROPEAN PATENT APPLICATION

(21) Application number: **83111236.2**

(22) Date of filing: **10.11.83**

(51) Int. Cl.³: **G 01 T 1/00,** G 01 T 1/20,
G 01 T 1/164, G 01 T 1/202

(30) Priority: **12.11.82 JP 199635/82**

(43) Date of publication of application: **04.07.84**
**Bulletin 84/27**

(84) Designated Contracting States: **DE FR NL**

(71) Applicant: **TOKYO SHIBAURA DENKI KABUSHIKI**
**KAISHA, 72, Horikawa-cho Saiwai-ku, Kawasaki-shi**
**Kanagawa-ken 210 (JP)**

(72) Inventor: **Murata, Moriyoshi, 1998-25, Usuba,**
**Ootwara-shi Tochigi-ken (JP)**

(74) Representative: **Patentanwälte Henkel, Pfenning, Feiler,**
**Hänzel & Meinig, Möhlstrasse 37,**
**D-8000 München 80 (DE)**

(54) **Multi-channel radiation detector and method of fabricating the same.**

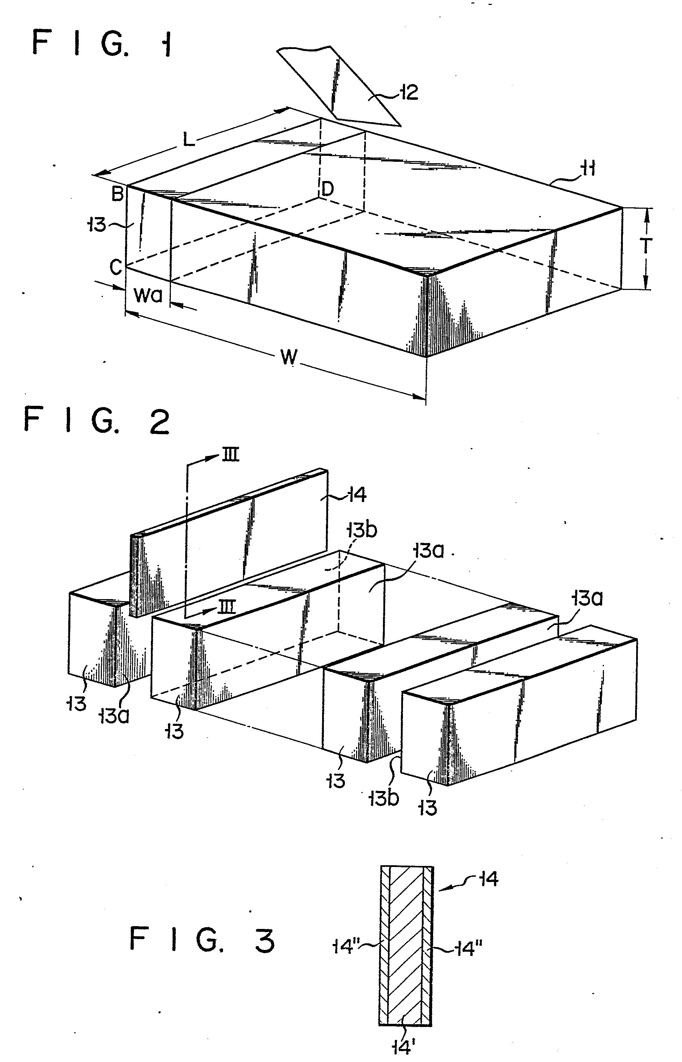

(57) A multi-channel radiation detecting module is fabri-
cated by cleaving a scintillator single crystal block (11
Fig. 1) into scintillator segments (13). The segments (13) are
integrally assembled with channel separators (14) inter-
posed therebetween such that exposed complementary
cleaved planes of the segments (13) oppose each other,
thereby providing a scintillator assembly. The assembly is
fixed on an array of photosensors.

- 1 -

## Multi-channel radiation detector and method of fabricating the same

The present invention relates to a radiation detector and, more particularly, to a multi-channel radiation detecting module which is suitably adapted for a radiation tomographic apparatus.

A radiation tomographic apparatus such as an X-ray computerized tomography (CT) apparatus has an X-ray tube which pivots about the axis of an object to be examined (i.e., a patient) and a detection device opposing the X-ray tube, with the patient interposed therebetween. The detection device comprises an array of a plurality of multi-channel detecting modules.

The X-ray tube is sequentially pivoted at a pitch of 0.6° about the axis of the patient's body. X-rays projected from the X-ray tube at each angular position and transmitted through the patient are detected by the detection device. Image reconstruction is performed in accordance with a number of projection data which are produced from the detection device at angular intervals of 0.6° of the X-ray tube. The reconstructed image is displayed at a display device. Based on the displayed image, a physician can determine the physical condition of a patient and confirm the presence of diseases.

In order for a physician to perform reliable diagnosis, a tomograph obtained by an X-ray tomographic apparatus must have an extremely high precision. One of the factors which determine the quality of a tomograph is the performance of the modules constituting the radiation detecting device.

A multi-channel detecting module constituting a radiation detection device comprises an array of a plurality of scintillator segments, each of which comprises a rectangular body (e.g., of 20 to 25 mm in length, about 2 mm in width, and about 4 mm in height). The scintillator consists of a material capable of converting radiation into light, such as thallium-containing cesium iodide (CsI:Tl), bismuth germanate ($Bi_4Ge_3O_{12}$), magnesium tungstate ($MgWO_4$), or the like. A photosensor, such as a photodiode or a phototransistor, is fixed to the lower surface of each scintillator segment through an adhesive having excellent light transmission characteristics. A light-shielding member is inserted and fixed between adjacent scintillator segments. Such modules are arranged to be fixed on an insulating substrate.

When X-rays from the X-ray tube are incident on the top surface of each scintillator segment, the scintillator segment converts the incident X-rays into light which is, in turn, detected by the corresponding photosensor and is converted into an electric current. The current is produced from a terminal formed on the insulating substrate.

According to a conventional method for fabricating scintillator segments, a relatively large rectangular block of a material capable of converting radiation into light, as described above, is prepared. The block is then cut by a diamond cutter or wire saw to prepare individual scintillator segments.

According to this method, it is extremely difficult to obtain scintillator segments of predetermined sizes with good precision, and, thus, the assembly of detecting modules cannot perform with good precision.

0112475

This method is extremely disadvantageous considering the facts that the performance of the modules is largely dependent on the size precision of the scintillator segments and upon assembly precision (arrangement of the scintillator segments) of the module. When the arrangement of the scintillator segments is disturbed, the response of the module is subject to variation thereby adversely affecting the image quality of a tomograph.

In addition, the above-mentioned conventional method is time-consuming. For example, cutting of a block having a width of 24 mm into eight scintillator segments of the same width requires about 10 minutes for each scintillator segment and a total of about 70 minutes. Even when using a multi-wire saw which can simultaneously cut a block into a plurality of segments, cutting of a block into segments still requires about 10 minutes. Furthermore, this method results in relatively large material loss (about 20%) due to the formation of grinding chippings, and requires a time-consuming polishing process of the cut surfaces. The cutting width cannot be reduced below a certain limit, so that the spatial resolution of the module is limited.

An object of the present invention is to provide a method for fabricating a multi-channel radiation detecting module which has excellent processing and assembly precision.

Another object of the present invention is to provide a method for fabricating a multi-channel radiation detecting module which does not require polishing of the edges of scintillator segments formed from a block of single crystal material.

Still another object of the present invention is to provide a method for fabricating a multi-channel radiation detecting module which does not waste single crystal material used to form scintillator segments.

0112475

A further object of the present invention is to provide an efficient method for quickly fabricating a multi-channel radiation detecting module from a block of single crystal material.

Another object of the present invention is to provide a multi-channel radiation detector which includes scintillator elements formed by selectively cleaving a block of single crystal material along cleavage planes thereof.

Still another object of the present invention is to provide a multi-channel radiation detector which does not exhibit cross-talk between adjacent scintillator elements.

To accomplish these and other objects and to fabricate a multi-channel radiation detecting module of the present invention according to the method of the present invention, a scintillator block is first prepared which comprises single crystal material capable of converting radiation into light and which has cleavage planes. The block is cleaved into a plurality of scintillator segments at the cleavage planes. Each scintillator segment has cleavage planes which are complementary to exposed cleavage planes of adjacent segments. A scintillator assembly is prepared by integrally assembling these scintillator segments such that their complementary cleavage planes oppose each other and a channel separator is interposed between adjacent segments. The obtained scintillator assembly is fixed on a photosensor array. In this manner, a multi-channel radiation detecting module is fabricated.

The term "complementary cleavage planes" used in the specification and claims means two exposed, opposing surfaces of two pieces of a scintillator block obtained by cleaving the block at one cleavage plane. When these complementary cleavage planes are fitted together again, a state prior to cleaving is restored.

This invention can be more fully understood from the following detailed description when taken in conjunction with the accompanying drawings, in which:

Figs. 1 to 6 are views for explaining in sequence a method for fabricating a radiation detecting module according to an embodiment of the present invention; and

Figs. 7 and 8 are schematic views of radiation detectors in which a plurality of radiation detecting modules fabricated in accordance with the present invention are arrayed.

The present invention will now be described in detail with reference to the accompanying drawings.

Referring to Fig. 1, a rectangular block 11 is prepared from single crystal which is capable of converting radiation into light and which has cleavage planes. Examples of such single crystal material capable of converting X-rays into fluorescent light are sodium iodide (NaI) having a cleavage plane (100), calcium fluoride (CaF) having a cleavage plane (111), cadmium tungstate ($CdWO_4$) having a cleavage plane (101), zinc tungstate ($ZnWO_4$) having a cleavage plane (101).

In the example shown in Fig. 1, the cleavage planes of the block are parallel to a plane ABCD thereof. Such single crystal can be prepared easily in accordance with a conventional single crystal manufacturing method. The size of the block 11 can be freely selected in accordance with the required size of scintillator segments to be described later and the number of such segments to be assembled in a single module. For example, the block 11 can have a width W of 27 mm, a length L of 25 mm, and a thickness T of 1.9 mm.

A cutting blade 12 is brought into contact with the upper surface of the scintillator block 11 in a direction parallel to the plane ABCD to obtain scintillator segments 13 each having a width Wa. The block 11 easily cleaves at each cleavage plane when the blade 12 is brought into light contact with the top surface edge of the block 11 and a small force is applied to the blade 12.

Cleaving of the block 11 into segments along the cleavage planes does not produce any processing loss; the width Wa is equal to the width of each scintillator segment to be assembled into the module.

In this manner, the block 11 is divided into equal segments (e.g., 20 equal segments) so as to correspond to the number of segments (number of channels) to be assembled into a module. The time required for cleaving of a segment along a cleavage plane is as short as 5 seconds. The surfaces of the segments obtained by cleaving along the cleavage planes are very smooth and do not require polishing before use in a radiation detector.

The scintillator segments 13 obtained by cleaving the block 11 along planes parallel to the plane ABCD are arranged in an array on the same plane at equal intervals such that complementary cleavage planes 13a and 13b thereof oppose each other. In other words, the scintillator segments 13 are arranged in the order in which they have been cleaved.

A channel separator 14 is inserted between each two adjacent segments 13. Each channel separator 14 has surfaces corresponding to the cleavage planes of the scintillator segments. The channel separator 14 used can be a radiation-nontransparent collimator formed of lead, tantalum, tungsten or the like, or such a collimator with a paint such as titanium oxide or barium oxide or a light-reflecting material such as aluminum foil coated or adhered on each surface thereof.

A channel separator 14 shown enlarged in Fig. 3 consists of a lead plate 14' of 100 μm thickness and a light-reflecting material 14" coated on each surface of the plate 14' to a thickness of 10 μm. When such a channel separator comprising a combination of a radiation-nontransparent material and a light-reflecting material is used, crosstalk between adjacent scintillator segments can be prevented to a high degree. The channel separator 14 may comprise only a light-reflecting material.

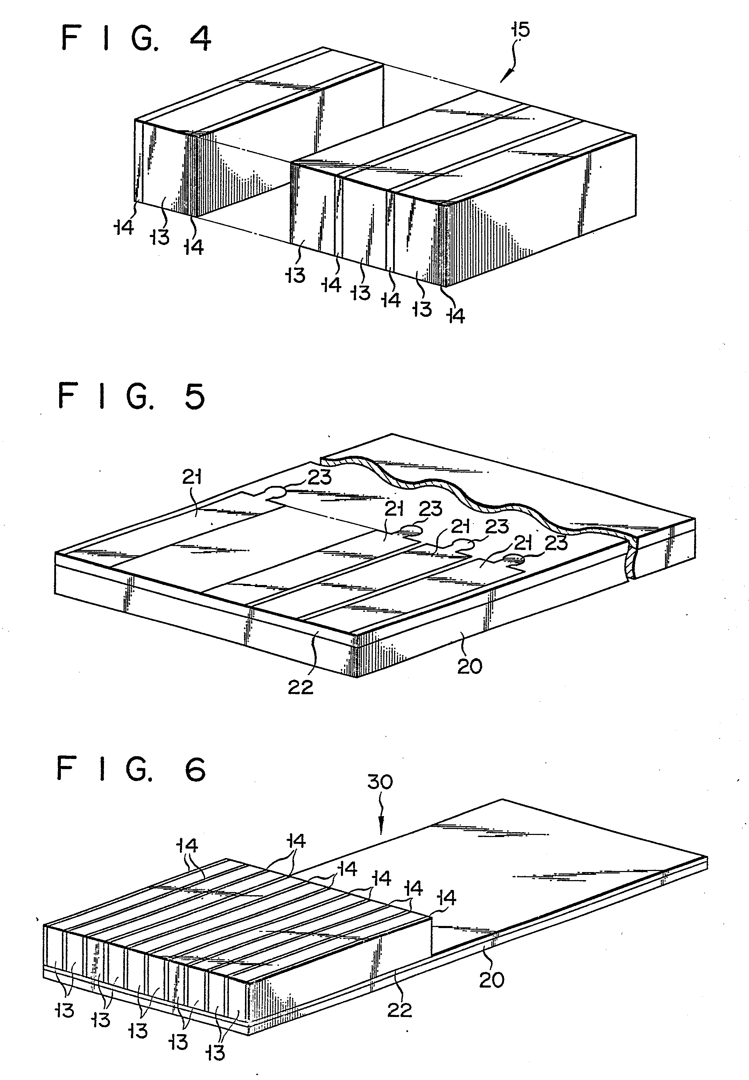

An adhesive is applied on each surface of each channel separator 14 to a thickness of, for example, 15 μm, and the channel separator 14 is interposed between each two adjacent segments 13. A similar channel separator is also arranged at the outer side surface of each end segment 13. The overall array is then pressed in the direction of the array of the segments 13 and in the direction perpendicular thereto, that is, in the vertical and horizontal directions. In this manner, a scintillator assembly 15 as shown in Fig. 4 is obtained wherein a plurality of scintillator segments 13 (constituting channels) and channel separators 14 interposed therebetween are formed integrally.

Such a scintillator assembly 15 is obtained by arranging the segments 13 obtained by cleaving the scintillator block 11 in the order in which they have been cleaved and interposing a channel separator 14 between each two adjacent segments 13. Accordingly, the total width of the segments 13 in the assembly 15 is equal to the width W of the block 11.

When a scintillator block 11 is cleaved at intervals of 1,000 μm, each segment has an error of 20 to 40 μm. However, the total width of the segments 13 in the resultant assembly 15 has no error; it has the width W of the block 11. The thickness of each channel separator 14 and the coating thickness of the adhesive can also be controlled with good precision with recent technology. Accordingly, the method of the present invention provides a scintillator assembly of good precision. One surface of the assembly 15 which is perpendicular to the cleavage plane of the segment 13 is a radiation incident surface, and the opposite surface is a light output surface.

As shown in Fig. 5, an array of photosensors 21 is

- 8 -

C112475

formed on a rectangular insulating substrate (ceramic, glass-epoxy or the like) 20. The photosensor can be photodiodes or phototransistors. The photosensors 21 each have a shape corresponding to the lower surfaces of the corresponding segments 13 of the scintillator assembly 15, and are arranged at the same pitch as that of the segments 13. For example, an array of photosensors 21 prepared by forming, by a known method, p-n junctions at predetermined portions of a photosensitive material (e.g., silicon) 22 is secured on the insulating substrate 20. Each photosensor 21 has a terminal 23 for producing a current therefrom.

The scintillator assembly 15 and the array of photosensors 21 are fixed to each other with an adhesive having good light transmission characteristics such that the light output planes of the segments 13 of the assembly 15 correspond to the respective photosensors 21. The adhesive may be an epoxy resin or the like. Prior to this fixing process, the surface of the scintillator assembly 15 to be joined with the photosensors 21 is polished and smoothened. In this manner, as shown in Fig. 6, a multi-channel radiation detecting module 30 is fabricated.

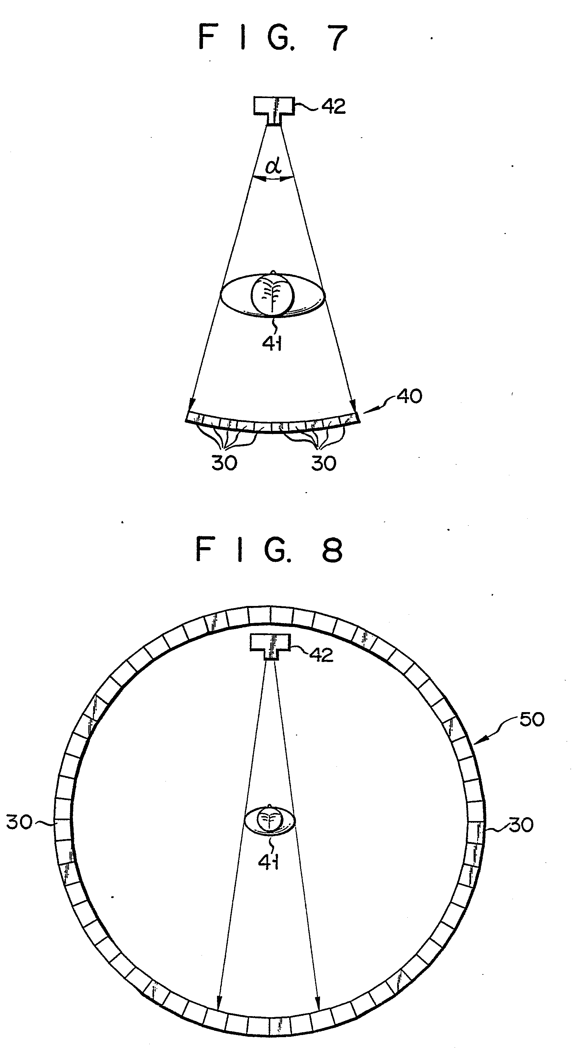

Fig. 7 shows a radiation detection device 40 in which a plurality (e.g., 100 to 300) of multi-channel radiation detecting modules 30 of the present invention are arranged in an arc. The detection device 40 is opposed to an X-ray tube 42 with a patient 41 interposed therebetween. A divergence angle α of the X-ray beams from the X-ray tube 42 is set to be, for example, 30°, and the arc of modules 30 is arranged to correspond to this angle α. The X-ray tube 42 and the detection device 40 are rotated together through 360° while opposed to each other and having the patient 41 interposed therebetween.

Fig. 8 shows a radiation detection device 50 in which multi-channel radiation detecting modules 30 are

- 9 -                    C112475

arranged along the entire circumference of a circle.  An X-ray tube 42 is interposed between the device 50 and a patient 41 at the center thereof, and the X-ray tube 42 alone is rotated through 360°.

According to the present invention, scintillator segments are obtained by cleaving a scintillator single crystal block along its cleavage planes.  Accordingly, unlike in the conventional case, no grinding chippings are produced and material loss is thus eliminated. Processing is also easy and can be done in a short period of time.  Since the scintillator segments are cleaved along the cleavage planes and the cleavage planes are parallel to each other, a multi-channel radiation detecting module of excellent size precision and performance can be obtained upon arranging the scintillator segments in the order in which they have been cleaved.  Finally, a scintillator segment of a small width can be obtained by cleaving a scintillator block, so that a multi-channel radiation detecting module with a high spatial resolution can be obtained.

While the salient features of the invention have been described with reference to the drawings, it should be understood that the preferred method and embodiment of the invention are susceptible of modification without departing from the spirit and scope of the following claims.

Claims:

1. A method for fabricating a multi-channel radiation detecting module, comprising:

providing a scintillator single crystal block having cleavage planes;

cleaving said block along the cleavage planes into a plurality of scintillator segments constituting channels, said scintillator segments having exposed, complementary cleavage planes;

integrally assembling said scintillator segments with a channel separator interposed between each two adjacent scintillator segments such that said complementary cleavage planes oppose each other, thereby providing a scintillator assembly; and

fixing said scintillator assembly on an array of photosensors.

2. A method according to claim 1, characterized in that said single crystal is selected from the group comprising single crystals of sodium iodide, calcium fluoride, cadmium tungstate, and lead tungstate.

3. A method according to claim 1, characterized in that said channel separator comprises a collimator formed of a radiation-nontransparent material.

4. A method according to claim 3, characterized in that said collimator is formed of a member selected from the group consisting of tungsten, tantalum, and lead.

5. A method according to claim 3, characterized in that said collimator has a layer of a light-reflecting material on a surface thereof.

6. A method according to claim 5, characterized in that said light-reflecting material is selected from the group consisting of titanium oxide and barium oxide.

7. A method according to claim 1, characterized in that said channel separator comprises a light-reflecting material.

8. A method according to claim 1, characterized in

- 2 -    C112475

that said array of said photosensors is formed on an insulating substrate.

9. A method according to claim 1, further including the step of polishing a surface of said scintillator assembly to be joined with said array of said photosensors.

F I G. 1

F I G. 2

F I G. 3

FIG. 4

FIG. 5

FIG. 6

3/3

0112475

# F I G. 7

# F I G. 8

European Patent Office

**EUROPEAN SEARCH REPORT**

C112475

Application number

EP 83 11 1236

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | IEEE TRANSACTIONS ON NUCLEAR SCIENCE, vol. NS-14, no. 1, February 1967, pages 468-473, New York, US D.W. AITKEN et al.: "The fluorescent response of NaI(Tl), ScI(Tl), CsI(Na) and CaF2(Eu) to x-rays and low energy gamma rays" * Page 468, column 2, paragraphs 1-3 * | 1,2 | G 01 T 1/00 G 01 T 1/20 G 01 T 1/164 G 01 T 1/202 |
| Y | GB-A-2 005 405 (MACHLETT LABORATORIES) * Abstract; page 2, lines 32-74; page 2, line 88 - page 3, line 24 * | 1-3,5, 7-8 | |
| A | FR-A-2 416 481 (GENERAL ELECTRICY.) * Page 2, lines 6-29; page 3, lines 5-8; page 3, line 29 - page 4, line 11; figures * | 1,3,4, 8,9 | TECHNICAL FIELDS SEARCHED (Int. Cl. 3) |
| A | US-A-3 068 359 (R.W. CARLSON) * Column 2, lines 16-58; column 3, lines 48-58 * | 6 | G 01 T |

--- -/-

The present search report has been drawn up for all claims

| Place of search | Date of completion of the search | Examiner |
|---|---|---|
| THE HAGUE | 07-03-1984 | DATTA S. |

| | **DOCUMENTS CONSIDERED TO BE RELEVANT** | | Page 2 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | IEEE TRANSACTIONS ON NUCLEAR SCIENCE, vol. NS-29, no. 3, June 1982, pages 1237-1249, IEEE, New York, US<br>M.R. FARUKHI: "Recent developments in scintillation detectors for x-ray CT and positron CT applications" * Page 1237, column 1, paragraph 1 - column 2, end of 3rd paragraph; tables 1,2,5 *<br><br>----- | 1,2 | |
| | | | TECHNICAL FIELDS SEARCHED (Int. Cl. ³) |

The present search report has been drawn up for all claims

| Place of search THE HAGUE | Date of completion of the search 07-03-1984 | Examiner DATTA S. |
|---|---|---|